# EUROPÄISCHE PATENTSCHRIFT

(11) **EP 1 285 543 B1**
(45) Veröffentlichungstag und Bekanntmachung des Hinweises auf die Patenterteilung: **28.11.2007**
(21) Anmeldenummer: 01943113.9
(22) Anmeldetag: 17.05.2001
(51) Int. Cl.: H04Q 3/545

(54) **VORRICHTUNG ZUM OPTIMIEREN VON PERIPHEREN EINRICHTUNGEN EINES KOMMUNIKATIONSSYSTEMS**
DEVICE FOR OPTIMIZING PERIPHERAL DEVICES IN A TELECOMMUNICATION NETWORK
DISPOSITIF POUR OPTIMISER DES UNITES PERIPHERIQUES D'UN SYSTEME DE COMMUNICATION

(30) Priorität: 29.05.2000 DE 10026636
(43) Veröffentlichungstag der Anmeldung: 26.02.2003
(73) Patentinhaber: NOKIA SIEMENS NETWORKS GMBH & CO. KG, 81541 München (DE)
(72) Erfinder: ELTSCHKA, Herwig, 82319 Starnberg (DE); LÖBIG, Norbert, 64291 Darmstadt (DE)
(86) Internationale Anmeldenummer: PCT/DE2001/001892
(87) Internationale Veröffentlichungsnummer: WO 2001/093604

(56) Entgegenhaltungen:
- EP-A- 0 282 197
- US-A- 4 903 258

## Beschreibung

Die Erfindung betrifft eine Vorrichtung gemäß dem Oberbegriff von Patentanspruch 1.

Die Struktur eines Vermittlungsknotens ist in der europäischen Patentanmeldung EP-A-1 104 205 beschrieben. Aus Gründen der Ausfallsicherheit sind die zentralen Komponenten des Vermittlungssystems redundant (z.B. gedoppelt) ausgelegt. Die peripheren Einrichtungen können nicht redundant sein oder im Falle von verschärften Ausfallanforderungen (z. B. Retten stabiler Verbindungen über den Ausfall einer peripheren Einrichtung hinaus) Redundanz besitzen.

Die Leistungsfähigkeit der peripheren Einrichtungen wird bestimmt durch die Performanz der Prozessoren der peripheren Einrichtung, die Größe der vermittlungstechnisch nutzbaren Pools an Konferenzpunkten, Tongeneratoren und DTMF-Empfänger, die Kapazität der Protokollabschlußeinrichtung (HDLC Ports und Nachrichtendurchsatz), die Anzahl der terminierten Leitungen pro peripherer Einrichtung, die Nachrichtenschnittstelle für Signalisierungsnachrichten (DSS1/ISUP) und Paketdaten auf dem D-Kanal, die interne Schnittstelle zum Nachrichtenverteilsystem sowie durch die Größe des Datenspeichers.

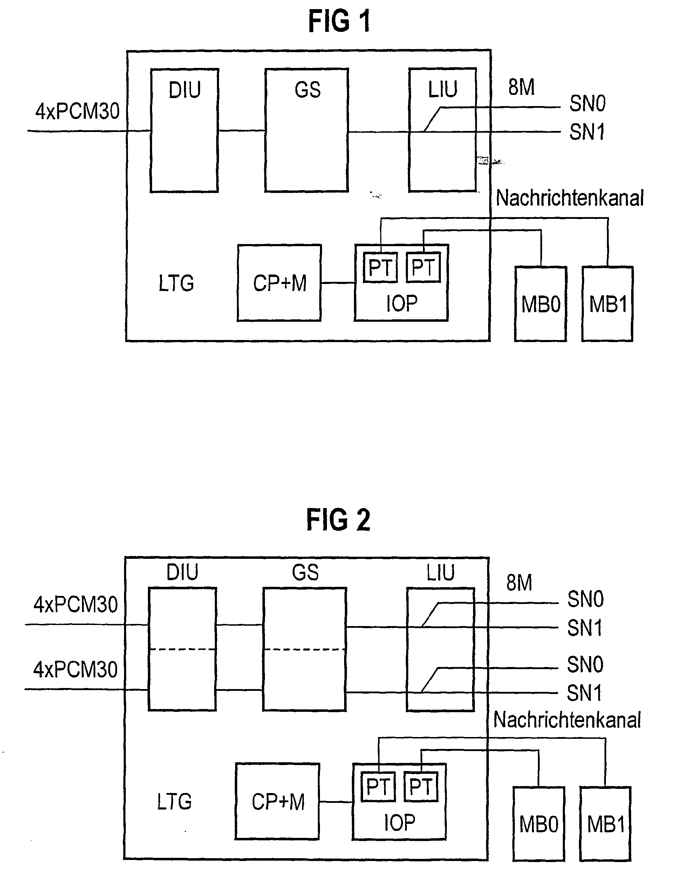

Die klassische periphere Einrichtung LTG gemäß dem Stand der Technik (siehe Fig. 1) besteht aus Hardwareeinrichtungen zur Terminierung der Anschlüsse zur Peripherie DIU und zum zentralem Koppelnetz SN0, SN1, einem internen Koppelnetz GS, Pools von vermittlungstechnischen Funktionen LIU (Tongenerator etc.) sowie einem zentralen Prozessorkern bestehend aus Prozessor und Speicher (CP+M)und Zugang (IOP) zur zentralen Rechnerplattform CP. Sie terminiert genau die Verbindungsleitungen, für deren vermittlungstechnische Bearbeitung sie zuständig ist. Aus Gründen der Ausfallsicherheit ist der Zugang zur zentralen Rechnerplattform CP gedoppelt in Form eines aktiven Nachrichtekanales und eines ersatzweise zur Verfügung stehenden Nachrichtenkanals ausgeführt, die in getrennten Terminierungen (PT) abgeschlossen werden. Üblicherweise finden sich periphere Einrichtungen zur Terminierung von n PCM-Strecken (z. B. n = 4 PCM30-Strecken für 120 Verbindungsleitungen). Die Entwicklung der Prozessoren hin zu höherer Leistung ermöglicht es, die Zahl der terminierbaren Strecken pro peripherer Einrichtung deutlich zu erhöhen.

Ohne Anpassung der Software der Vermittungsstelle kann die periphere Einrichtung nur die durch die heutige physikalische Terminierung bestimmte maximale Anzahl von anschließbaren Verbindungsstrecken bearbeiten. Eine Optimierung durch einfache Erhöhung der Anzahl der pro peripherer Einrichtung bearbeitbarer PCM-Strecken hat Rückwirkungen auf alle Einrichtungen des Vermittlunssystems bis hin zu Ein- und- Ausgabeoperationen. Auf Grund des entstehenden großen Änderungsaufwands ist dies eine zwar strukturell saubere, aber unwirtschaftliche Vorgehensweise.

Damit stellt sich folgendes technische Problem:

Wie kann in einer HW-Plattform für peripheren Einrichtungen, die zur Erfüllung vermittlungstechnischer Aufgaben genutzt werden, die Zahl von Teilnehmer- bzw. Trunk-Anschlüssen durch optimale Nutzung der Kapazität des vorhandenen Prozessors und Speichers erhöht werden, so daß insbesondere die bisherigen peripheren Einrichtungen weiterhin als durch die bisherige Peripheriebegrenzungen charakterisierte Struktur erhalten bleiben. Hierzu sind eventuelle Software-Änderungsaufwendungen im Vermittlungssystem und außerhalb des Vermittlungssystems (z. B. Support Tools des Herstellers und des Netzbetreibers) zu minimieren, wobei die internen und externen Schnittstellen zu anderen Einrichtungen des Vermittlungssystems und außerhalb des Vermittlungssystems nicht betroffen sein sollen, womit SW, FW, HW- Änderungsaufwand weitgehend vermieden wird. Schließlich sollte Kompatibilität mit alter Umgebung vorhanden sein, das heißt Einstzbarkeit und Verträglichkeit der HW-Plattform für periphere Einrichtungen in Vermittlungsstellen mit älterem Versions-Stand der Vermittlungsstellen-SW, die die optimierte Nutzung der HW-Plattform nicht unterstützen.

Beim Stand der Technik haben periphere Einrichtungen gemäß Fig. 1 bislang stets HW-Bezug. Sie sind die Einheiten, welche Verbindungsleitungen, Verbindungsleitungen zu Teilnehmeranschlußkonzentratoren und Teilnehmeranschlußleitungen physikalisch terminieren. Über diese Terminierung werden sie in der SW der Vermittlungsstelle identifiziert.

Sollen nur Signalisierungsprotokolle abgeschlossen oder konvertiert werden, so erfolgt dies auf Einrichtungen ohne physikalischen Leitungsbezug, die die von Ihnen bedienten Teilnehmer/Leitungen zu vorgelagerten Konzentratoren und Verbindungsleitungen nicht selbst terminieren. Dies sind z.B. periphere Einrichtungen, auf denen ein Prozessor mehrere in SW realisierte periphere Einrichtungen betreibt. Ein Beispiel für eine derartige Realisierung ist in der europäischen Patentanmeldung EP 99123208.3 beschrieben.

Beim Stand der Technik bilden jedoch die peripheren Einheiten, welche Verbindungsleitungen, Verbindungsleitungen zu Teilnehmeranschlußkonzentratoren und Teilnehmeranschlußleitungen physikalisch terminieren, mit dem zugeordneten Prozessor, den zugeordneten Verbindungsleitungen zum Koppelnetz sowie zum Nachrichtenverteilsystem, und zum zentralem Rechner eine Einheit. Eine Zusammenlegung mehrerer solcher Einheiten zu einer größeren Einheit mit einem gemeinsamen Prozessorkern zum Zwecke der Einsparung von Platzbedarf und Kosten hat damit erhebliche Software-Änderungen zur Folge, was im Hinblick auf die Menge der zu portierenden Programme kostenintensiv und damit problematisch ist. Damit verbunden sind umfangreiche interne Schnittstellenänderungen und Änderungen an der Bedienerschnittstelle des Vermittlungssystems sowie an vorgelagerten / unterstützenden Tools von Hersteller und Netzbetreiber.

Der Erfindung liegt die Aufgabe zugrunde, eine Vorrichtung anzugeben, mittels der in einer HW-Plattform für periphere Einrichtungen die Zahl von Teilnehmer- bzw. Trunk-Anschlüssen erhöht werden kann, wobei zugleich die peripheren Einrichtungen weiterhin als durch die bisherige Peripheriebegrenzungen charakterisierte Struktur erhalten bleiben.

Die Erfindung wird, ausgehend vom Oberbegriff von Patentanspruch 1, durch die im kennzeichnenden Teil angegebenen Merkmale gelöst.

Vorteilhaft an der Erfindung ist insbesondere, daß die Notwendigkeit größerer und komplexer Änderungen in der SW der Vermittlungsstelle entfällt. Die erzielbaren Kosten und Platzeinsparungen sind ferner größer, als sie durch das Vorsehen kleiner, stark SW-relevanter HW-Strukturen mit je einer eigenen Steuerung mit gleicher HW-Technoloie erreichbar sind. Erfindungsgemäß werden die einzelnen Steuerungseinheiten durch eine einzige zentrale HW-Steuerung für mehrere HW-Strukturen ersetzt und zwar derart, daß die Vermittlungsstellen-SW weiterhin die kleinen HW-Strukturen sieht und bedient.

Hierzu wird die beim Stand der Technik verwendete Konfiguration für nicht mit HW- direkt verknüpfte Steuerungen auf HWbezogene Steuerungen ausgedehnt. Die enstehenden peripheren Einrichtungen virtuellen Charakters besitzen HW-Bezug und werden über eigene physikalische Schnittstellen an das Koppelnetz der Vermittlungsstelle angeschlossen. In Richtung Nachrichtenverteilsystem besitzen sie eine eigene logische Schnittstelle, die sich durch eine eigene Adresse der virtuellen peripheren Einrichtung im Vermittlungssystem ausdrückt.

Eine HW-Plattform für eine Mehrzahl peripherer Einrichtungen kann eine Mehrzahl physikalischer Anschlüsse zum internen Nachrichtenverteilsystem haben, die jeweils mindestens eine logische Schnittstelle einer peripheren Einrichtung virtuellen Charakters enthalten.

Vorteilhafte Weiterbildungen der Erfindung sind in den Unteransprüchen vorgesehen.

Die Erfindung wird im folgenden anhand eines figürlich dargestellten Ausführungsbeispieles näher erläutert.

Es zeigen:
- Fig 1: die Architektur einer einer klassichen peripheren Einrichtung gemäß dem Stand der Technik,
- Fig 2: die Architektur der Vorrichtung anhand zweier peripherer Bündel von Zugangsleitungen, gesteurt durch einen Prozessor.

Die in der europäischen Patentanmeldung EP 99123208.3 beschriebene Konfiguration, nach der das auf der peripheren Einrichtung laufende Betriebssystem und die Hardwarenahen sicherungstechnischen Programme der peripheren Einrichtung derart geändert werden, daß sie die Unterstützung von n virtuellen peripheren Einrichtungen, welche auf der gleichen Hardware-Prozessorbasis aktiv sind, unterstützen (z. B. mittels verallgemeinertem Taskwechsel, wird auf eine periphere Einrichtung angewendet, die n (z.B. zwei) reale und der vermittlungstechnischen SW bekannte periphere Einrichtungen umfaßt, aber nur einen gemeinsamen Prozessor, Speicher und eine oder mehrere physikalische Schnittstellen zum Nachrichtenverteilsystem aufweist. Die entsprechenden Verhältnisse sind in Fig. 2 wiedergegeben.

Das zentrale Programm zur Verteilung der Nachrichten, welche eine real vorhandene periphere Einrichtung erreichen, auf der virtuell existierende periphere Einrichtungen ohne Bezug zur HW-Peripherie realisiert sind, bleibt damit unverändert, wenn statt der virtuellen nun reale periphere Einrichtungen mit HW-Bezug von der zentralen Einrichtung gesteuert werden. Bei Existenz mehrerer physikalischer Nachrichtenschnittstellen an der für mehrere periphere Einrichtungen gemeinsamen Prozessorsteuerung muß der Verteilalgorithmus angepaßt werden. Die n vom gleichen physikalischen Prozessorkern gesteuerten peripheren Einrichtungen benutzen das gleiche Interface zum Nachrichtenverteilsystem. Die Zuordnung zwischen den peripheren Einrichtungen und dem zentralen Prozessorkern erfolgt auf administrativem Wege.

Nutzen mehr als eine periphere Einrichtung einer für eine Mehrzahl peripherer Einrichtungen aktiven Prozessorsteuerung den gleichen physikalischen Nachrichtenkanal, ist das Nachrichtenverteilsystem derart angepaßt, daß es die Adressierung verschiedener logischer peripherer Einrichtungen über den gleichen Nachrichtenkanal unterstützt. Dies bedeutet, daß das Nachrichtenverteilsystem auf Grund der logischen Adresse der peripheren Einrichtungen den physikalischen Nachrichtenkanal zum zentralen Prozessorkern findet, über den die Ausgabe erfolgen soll. Damit die Nachricht in der peripheren Einrichtung an die richtige virtuelle periphere Einrichtung zugestellt werden kann, wird die logische Zieladresse als Teil des Nachrichten-Headers mitübertragen und in dem schon genannten zentralen Programmanteil der peripheren Einrichtung zur Weiterverteilung an die adressierte virtuelle periphere Einrichtung herangezogen. Besitzt jede der peripheren Einrichtungen unter einer gemeinsamen Prozessorsteuerung eine eigene physikalische Schnittstelle zum Nachrichtenverteilsystem, bleibt das Nachrichtenverteilsystem unverändert.

Die Sicherungstechnik der peripheren Einrichtung mit virtuellen Anteilen wird derart angepaßt, daß der Ausfall bzw. die Wiederverfügbarkeit einer peripheren Einrichtung besonders einfach wird:

Fällt eine für alle peripheren Einrichtungen unter einer gemeinsamen Prozessorsteurung relevante Hardware aus, so führt dies zum Ausfall aller auf dieser Einrichtung laufenden peripheren Einrichtungen. Geht die Hardware nach Neuladen der Software oder nach Reparatur wieder in Betrieb, führt dies zur Wiederverfügbarkeit der Funktionen der zugehörigen peripheren Einrichtungen. Aus Einfachheitsgründen kann der durch Software-Fehler hervorgerufene temporäre Ausfall einer virtuellen peripheren Einrichtung ebenfalls auf die temporäre Nichtverfügbarkeit aller auf der zugeorneten peripheren Einrichtung laufender peripheren Einrichtungen abgebildet werden (dies bedeutet, der von einer virtuellen peripheren Einrichtung erkannte und gemeldete Programmdefekt führt im einfachsten Fall zur Außerbetriebnahme der gesamten peripheren Einrichtung und zur automatischen Wiederinbetriebnahme nach Neuladen der peripheren Einrichtung).

Das Ladeprogramm zum Laden von Programm- und Datenanteilen vom Hintergrundspeicher in die periphere Einrichtung wird derart angepaßt, daß ein selektives Laden aller Daten der einem zentralen Prozessorkern zugeordneten virtuellen peripheren Einrichtungen über mindestens einen physikalischen Kanal ermöglicht wird. Ist das Programm aller peripheren Einrichtungen auf einer physikalischen peripheren Einrichtung identisch, so kann zur Optimierung auf das mehrmalige Laden des gleichen Programms verzichtet werden.

Die Anzahl der auf einer HW-Plattform für periphere Einrichtungen ablauffähigen peripheren Einrichtungen wird bestimmt aus der Performanz der auf der peripheren Einrichtung eingesetzten Prozessoren, der Speichergröße und der Leistungsfähigkeit der Nachrichtenschnittstelle zum Restsystem sowie dem Platzbedarf der notwendigen einrichtungsindividuellen HW. Ist insbesondere die Schnittstelle zum Nachrichtenverteilsystem nicht leistungsfähig genug, so können zusätzliche, das Nachrichtenverteilsystem entlastende bzw. umgehende Nachrichtenwege zwischen peripheren Einrichtungen und weiteren Einrichtungen des Vermittlungssytems geschaltet werden.

Die HW Struktur der peripheren Einrichtungen insbesondere die Zahl der von einer Einrichtung terminierten Sprachkanäle hat starken Einfluß auf die Struktur der vermittlungsbezogenen Datenbasis und der Bearbeitungs SW. Durch Steigerung der Leistungsfähigkeit der Prozessoren, erhöhte Speicherdichte sowie durch Verkleinerung der Abmessungen der die Sprachkanäle abschließenden HW ist es möglich, in einer HW-Plattform für periphere Einrichtungen auf gleichem Platz ein Mehrfaches an Sprachkanälen zu terminieren als es mit einer verfügbaren peripheren Einrichtungen gleicher Abmessungen möglich ist.

Die dargestellte Konfiguration kann dazu dienen, solche Verdichtungen für die im System laufende Anwender SW und die Bedienerschnittstelle weitgehend unsichtbar zu machen, indem mehrere periphere Einrichtungen bisheriger Struktur und Sprachkanalzahl auf einer HW-Plattform für periphere Einrichtungen gesehen und schnitttstellenmäßig bereitgestellt werden, welche vergrößerte HW-Ressourcen und eine zentrale Prozessorsteuerung besitzt.

In zeitgemäßen Kommunikationssystemen terminiert eine periphere Einheit LTG heute 4 PCM30 Strecken und ist auf einer Karte realisiert. Die erforderlichen Steueraufgaben werden von einem Prozessor in dieser Einrichtung LTG erledigt. Die gesteigerte Leistungsfähigkeit der Prozessoren und die flächenmäßige Verdichtung der HW erlauben es, pro Karte eine größere Anzahl von Anschlüssen durch einen Prozessor zu steuern. Die heute vorliegende HW-Zuordnung ist aber fest in der SW des Vermittlungssystems (z. B. des koordinierenden Steuerprozessors) verankert und nur mit großem Aufwand zu ändern.

Durch Anwendung der Erfindung ist es möglich, die Zahl der Anschlüsse pro Karte zu verdoppeln, wobei die SW der Vermittlungsstelle weiterhin kleine Einrichtungen sieht, und daher nur geringfügig geändert werden muß. Die entstehenden virtuellen peripheren Einrichtungen mit HW-Bezug werden über eigene physikalische Anschlüsse zum Koppelnetz angeschlossen und besitzen eigene logische Adressen innerhalb des internen Nachrichtenverteilsystems.

## Patentansprüche

1. Vorrichtung zur Bearbeitung von über ein Vermittlungssystem geführten und einer Mehrzahl peripherer Einrichtungen zugeordneter Verbindungen, wobei jeder der peripheren Einrichtungen (LTG) jeweils Schnittstellen zu systeminternen und systemexternen Einrichtungen zugeordnet ist,
**dadurch gekennzeichnet,**
**daß** jede der peripheren Einrichtungen eine eigene logische Schnittstelle zum vermittlungssysteminternen Nachrichtenverteilsystem aufweist,
**daß** eine der Mehrzahl der peripheren Einrichtungen gemeinsame Prozessorsteuerung vorgesehen ist, die die Aufgaben jeder der in der Mehrzahl enthaltenen peripheren Einrichtungen in gleicher Weise bearbeitet, wie dies durch eigene pro peripherer Einrichtung vorhandene Prozessorsteuerungen gegeben ist.

2. Vorrichtung nach Anspruch 1,
**dadurch gekennzeichnet,**
**daß** pro peripherer Einrichtung eine feste oder administrierbare Anzahl von PCM/SDH-Strecken zu vorgelagerten Konzentratoren, Nebenstellen oder fernen Vermittlungssystemen terminiert wird.

3. Vorrichtung nach Anspruch 1, 2,
**dadurch gekennzeichnet,**
**daß** pro gemeinsamer Prozessorsteuerung eine feste oder administrierbare Anzahl von peripheren Einrichtungen in Abhängigkeit vom HW-Ausbau der Plattform, dem Call Model, der Prozessorleistung, der Performanz der Nachrichtenschnittstelle und dem Speicherausbau gesteuert wird.

4. Vorrichtung nach Anspruch 1,
**dadurch gekennzeichnet,**
**daß** die logische Schnittstelle zum Nachrichtenverteilsystem pro peripherer Einrichtung einer gemeinsamen Prozessorsteuerung in einem Nachrichtenkanal enthalten ist, der exklusiv oder von mehreren peripheren Einrichtungen der gemeinsamen Prozessorsteuerung genutzt wird.

5. Vorrichtung nach Anspruch 1 bis 4,
**dadurch gekennzeichnet,**
**daß** das Laden der peripheren Einrichtungen durch die gemeinsamen Prozessorsteuerung über die zugeordnete logische Schnittstelle zum Nachrichtenverteilsystem unterstützt wird.

6. Vorrichtung nach einem der vorstehenden Ansprüche,
**dadurch gekennzeichnet,**
**daß** der Ausfall/ Wiederverfügbarkeit der gemeinsamen Prozessorsteuerung oder von zentralen HW-Anteilen den Ausfall/ Wiederverfügbarkeit aller zugeordneten peripheren Einrichtungen nachzieht.

7. Vorrichtung nach einem der vorstehenden Ansprüche,
**dadurch gekennzeichnet,**
**daß** eine Anwendung auf ungedoppelte und gedoppelte HW-Plattformen für periphere Einrichtungen vorgenommen wird, wobei im letztem Falle gedoppelte gemeinsame Prozessorplattformen für virtuelle periphere Einrichtungen mit HW-Bezug entstehen.

8. Vorrichtung nach einem der vorstehenden Ansprüche,
**dadurch gekennzeichnet,**
**daß** stabile Verbindungen für gedoppelt ausgelegte HW- Plattformen für periphere Einrichtungen gerettet werden, indem die mitlaufende Aktualisierung der vermittlungstechnischen Datenspeicher und Zustände auf der redundanten Einheit per logischem oder physikalisch in der peripheren Einrichtung vorhandenem Aktualisierungskanal (Synchronisierungskanal) vorgenommen wird.

9. Vorrichtung nach einem der vorstehenden Ansprüche,
**dadurch gekennzeichnet,**
**daß** die gemeinsame Prozessorsteuerung für die Mehrzahl peripherer Einrichtungen selbst aus einer Mehrzahl von Prozessoren besteht mit eigenem Programm- und Datenspeicher und eigener physikalischer Schnittstelle zum vermittlungsstelleninternen Nachrichtenverteilsystem.

10. Vorrichtung nach einem der vorstehenden Ansprüche,
**dadurch gekennzeichnet,**
**daß** die systemexternen Einrichtungen als angeschlossene Teilnehmer, Nebenstellen, vorgelagerte Teilnehmerkonzentratoren und /oder ferne Vermittlungssysteme ausgebildet sind.

11. Vorrichtung nach einem der vorstehenden Ansprüche,
**dadurch gekennzeichnet,**
**daß** spezifische HW für Schnittstellen zu systemexternen Einrichtungen, spezifische HW für Schnittstellen zum Koppelnetz des Vermittlungssystems oder für sonstige vermittlungstechnische Aufgaben der Vorrichtung zugeordnete HW wie z. B. Tongenerator, DTMF-Empfänger, Signalisierungsprotokollterminierung von der Mehrzahl der peripheren Einrichtungen der Vorrichtung genutzt werden.

## Claims

1. Device for processing connections which are routed via a switching system and a plurality of peripheral devices, where in each case interfaces to system-internal and system-external devices are assigned to each of the peripheral devices (LTG),
**characterised in that**
each of the peripheral devices has a separate logical interface to the message distribution system internal to the switching system,
for the plurality of peripheral devices, a shared processor controller is provided which processes the tasks of each of the peripheral devices comprising this plurality in the same way as happens when separate processor controllers are available for each peripheral device.

2. Device according to claim 1,
**characterised in that**
for each peripheral device a fixed or administrable number of PCM/SDH links to upstream concentrators, PBXs or remote switching systems is terminated.

3. Device according to claim 1, 2,
**characterised in that**
for each shared processor controller a fixed or administrable number of peripheral devices is controlled, the number depending on the HW configuration of the platform, the call model, the processor performance, the performance of the message interface and the memory size.

4. Device according to claim 1,
**characterised in that**
the logical interface to the message distribution system for each peripheral device of a shared processor controller is contained in a message channel which is used exclusively or by several peripheral devices of the shared processor controller.

5. Device according to claim 1 to 4,
**characterised in that**
there is support for the loading of the peripheral devices by the shared processor controller via the assigned logical interface to the message distribution system.

6. Device according to one of the preceding claims,
**characterised in that**
the failure/restored availability of the shared processor controller or of central HW elements results in the failure/restored availability of all the assigned peripheral devices.

7. Device according to one of the preceding claims,
**characterised in that**
an application is undertaken on unduplicated and duplicated HW platforms for peripheral devices whereby, in the latter case, the result is duplication of the shared processor platforms for virtual peripheral devices, with HW references.

8. Device according to one of the preceding claims,
**characterised in that**
for HW platforms with a duplicated design, robust connections are re-established for peripheral devices **in that** parallel updating of the call processing data memory and states is effected on the redundant unit by means of a logical updating channel (synchronisation channel) or one physically present in the peripheral device.

9. Device according to one of the preceding claims,
**characterised in that**
the shared processor controller for the plurality of peripheral devices itself consists of a plurality of processors with their own program and data memory, and a separate physical interface to the message distribution system internal to the switching centre.

10. Device according to one of the preceding claims,
**characterised in that**
the devices external to the system are in the form of connected subscribers, PBXs, upstream subscriber concentrators and/or remote switching systems.

11. Device according to one of the preceding claims,
**characterised in that**
the plurality of the peripheral devices of the device use specific HW for interfaces to system-external devices, specific HW for interfaces to the switching network of the switching system or for other call processing tasks of the HW assigned to the device, such as for example tone generators, DTMF receivers, signalling protocol terminations.

## Revendications

1. Dispositif pour le traitement de communications guidées au moyen d'un système de commutation et attribué à une pluralité de dispositifs périphériques, des interfaces avec des dispositifs internes au système et externes au système étant attribuées respectivement à chacun des dispositifs périphériques (LTG),
**caractérisé en ce que**
chacun des dispositifs périphériques comporte une interface logique propre avec le système de répartition d'informations interne au système de commutation,
**en ce qu'**une commande de processeur commune à la pluralité des dispositifs périphériques est prévue, laquelle traite de la même façon les tâches de chacun des dispositifs périphériques contenus dans la pluralité, comme ceci est assuré par des commandes de processeur propres présentes par dispositif périphérique.

2. Dispositif selon la revendication 1,
**caractérisé en ce que**,
par dispositif périphérique, un nombre fixe ou administrable de tronçons PCM/SDH allant à des concentrateurs, des postes secondaires placés en amont ou des systèmes de commutation éloignés est terminé.

3. Dispositif selon la revendication 1, 2,
**caractérisé en ce que**,
par commande de processeur commune, un nombre fixe ou administrable de dispositifs périphériques est commandé en fonction de l'extension du hardware de la plate-forme, du Call Model, de la puissance du processeur, de la performance de l'interface d'informations et de l'extension de la mémoire.

4. Dispositif selon la revendication 1,
**caractérisé en ce que**
l'interface logique avec le système de répartition d'informations est incluse par dispositif périphérique d'une commande de processeur commune dans un canal d'informations, qui est utilisé exclusivement ou par plusieurs dispositifs périphériques de la commande de processeur commune.

5. Dispositif selon les revendications 1 à 4,
**caractérisé en ce que**
le chargement des dispositifs périphériques par la commande de processeur commune est supporté par l'interface logique attribuée avec le système répartiteur d'informations.

6. Dispositif selon l'une quelconque des revendications précédentes,
**caractérisé en ce que**
la défaillance/la redisponibilité de la commande de processeur commune ou de parties de hardware centrales entraîne la défaillance/la redisponibilité de tous les dispositifs périphériques attribués.

7. Dispositif selon l'une quelconque des revendications précédentes,
**caractérisé en ce que**
une application à des plates-formes de hardware non doublées et doublées pour des dispositifs périphériques est effectuée, des plates-formes de processeur communes doublées dans le dernier cas étant formées pour des dispositifs périphériques virtuels avec référence au hardware.

8. Dispositif selon l'une quelconque des revendications précédentes,
**caractérisé en ce que**
des communications stables pour des plates-formes de hardware conçues en double pour des dispositifs périphériques sont sauvées en effectuant la mise à jour en cours d'exploitation des mémoires de données de commutation et d'états sur l'unité redondante par canal de mise à jour logique ou présent physiquement dans le dispositif périphérique (canal de synchronisation).

9. Dispositif selon l'une quelconque des revendications précédentes,
**caractérisé en ce que**
la commande de processeur commune pour la pluralité de dispositifs périphériques comprend une pluralité de processeurs avec une mémoire de programme et de données propre et une interface physique propre avec le système de répartition d'informations interne au centre de commutation.

10. Dispositif selon l'une quelconque des revendications précédentes,
**caractérisé en ce que**
les dispositifs externes au système sont conçus comme des abonnés raccordés, des postes secondaires, des concentrateurs d'abonnés placés en amont et/ou des systèmes de commutation éloignés.

11. Dispositif selon l'une quelconque des revendications précédentes,
**caractérisé en ce que**
des matériels spécifiques pour des interfaces avec des dispositifs externes au système, des matériels spécifiques pour des interfaces avec le réseau de couplage du système de commutation ou des matériels attribués pour d'autres tâches de commutation au dispositif, comme par exemple générateur de tonalité, récepteur DTMF, terminaison de protocole de signalisation, sont utilisés par la pluralité des appareils périphériques du dispositif.
